# EUROPEAN PATENT SPECIFICATION

(11) **EP 4 386 714 B1**
(45) Date of publication and mention of the grant of the patent: **08.04.2026**
(21) Application number: 23213288.6
(22) Date of filing: 30.11.2023
(51) Int. Cl.: G08G 5/00, G06N 3/00, G06Q 10/04, G06N 20/00, G06Q 50/40, G06N 3/08

(54) **MACHINE-LEARNING BASED AIRPORT DATA FORECASTING**
AUF MASCHINENLERNEN BASIERENDE FLUGHAFENDATENVORHERSAGE
PRÉVISION DE DONNÉES AÉROPORTUAIRES BASÉE SUR L'APPRENTISSAGE AUTOMATIQUE

(30) Priority: 15.12.2022 US 202218066621
(43) Date of publication of application: 19.06.2024
(73) Proprietor: The Boeing Company, Arlington, VA 22202 (US)
(72) Inventor: SANZONE, Andrea, Arlington, 22202 (US); SAHLE, Hilna, Arlington, 22202 (US)
(74) Representative: Boult Wade Tennant LLP

(56) References cited:
- US-A1- 2011 082 597
- US-A1- 2014 257 760
- US-A1- 2021 383 706
- US-A1- 2022 297 854

## Description

### FIELD OF THE DISCLOSURE

The present disclosure is generally related to forecasting airport data using one or more machine-learning models.

### BACKGROUND

Alternative aviation fuels (e.g., non-petroleum-based fuels, such as hydrogen, electricity, and sustainable hydrocarbons) are expected to change the aviation landscape in the years to come. However, adding new fuel sources generally entails costly infrastructure changes and implementation of new procedures. Often, such changes are instituted locally (e.g., airport-by-airport), resulting in a patchwork of availability. As a result, aircraft operators may find it challenging to switch to alternative fuels, since such fuels may not be available at each airport that the operator uses. Accordingly, there is a need to facilitate information exchange to enable aircraft operators to utilize alternative fuels.

Further, one common driver for the switch to alternative fuels is the environmental impact of petroleum-based fuels. While governments, regulatory agencies, environmental advocates, aircraft operators, and many others may support the switch to alternative fuels in general, it can be difficult to determine which specific changes are likely to have long-term benefit.

US2022297854A1, in accordance with its Abstract, states a method for optimizing the energy management and reducing the greenhouse gas emissions of a complex aeronautical assembly comprising at least one aircraft and an auxiliary power unit (APU). The method analyzing, in a centralized manner outside the aeronautical assembly, data from the aeronautical assembly to compare at least one state of a parameter of the assembly with a predetermined optimal state of the parameter. The data measured by sensors of the aeronautical assembly are collected. The collected data is transmitted to a digital processing and analysis platform. The data is processed by the platform implementing machine learning algorithms. Information relating to the processed data is displayed on a dashboard accessible via different terminals. A real-time alert is generated in the case of detection of an anomaly in the aeronautical assembly.

US2021383706A1, in accordance with its Abstract, states systems, apparatuses, and methods for more effectively providing pilots with optimal suggested route or trajectory changes during flight. This is achieved by at least two primary improvements: (1) expanding the set of available aircraft performance "models" used in the TASAR system's generation of recommended flight trajectory changes to account for the characteristics of a larger set of aircraft; and (2) modifying a baseline model for a type of aircraft to take into account the operating characteristics and condition of an individual aircraft. The baseline model may be generated by collecting data regarding the characteristics of a set of aircraft having a common manufacturer, type (e.g., airframe or class), and specific features. The collected operational and performance data may be used as input data or "features" for a machine learning algorithm to generate a parameter of a performance model.

US2014257760A1, in accordance with its Abstract, states a method for airport dynamic aviation planning. The method includes the steps of populating an existing conditions database comprising an inventory of existing conditions data at the airport, defining an aviation planning scenario with a graphical user interface by selecting input parameters, developing, by a processor, a future growth forecast comprising future levels of aviation activity at the airport in response to the selected input parameter, generating, by a processor, a facility requirements summary needed to satisfy the selected input parameter by comparing the difference between the future growth forecast and the existing conditions data, and generating, by a processor, a dynamic airport layout plan graphically representing the facility requirements.

US2011082597A1, in accordance with its Abstract, states systems and methods for optimizing energy consumption in multi-energy sources sites are provided. These techniques include developing a real-time model and a virtual model of the electrical system of a multi-energy source site, such as a microgrid. The real-time model represents a current state of the electrical system can be developed by collecting data from sensors interfaced with the various components of the electrical system. The virtual model of the electrical system mirrors the real-time model of the electrical system and can be used to generate predictions regarding the performance, availability, and reliability of cost and reliability of various distributed energy sources and to predict the price of acquiring energy from these sources. The virtual model can be used to test "what if" scenarios, such as routine maintenance, system changes, and unplanned events that impact the utilization and capacity of the microgrid.

### SUMMARY

In a particular example, a system includes one or more processors configured to obtain airport baseline data associated with an airport. The airport baseline data is descriptive of operational characteristics of the airport, including an estimated or measured value of an environmental impact metric associated with operations at the airport, including emissions of one or more chemicals of interest, and optionally, infrastructure of the airport. The one or more processors are further configured to modify one or more first parameters of the airport baseline data to generate first candidate modification data, wherein the one or more first parameters of the airport baseline data are modified to represent modifying fuel source availability at the airport. The one or more processors are also configured to provide first model input data based on the first candidate modification data as input to a trained machine learning model to generate first forecast data indicating a predicted result of modification of the one or more first parameters, the first forecast data including a predicted value of the environmental impact metric. The one or more processors are further configured to compare the first forecast data to one or more target values and to generate a notification if the first forecast data fails to satisfy the one or more target values; iteratively: modifying one or more second parameters of the airport baseline data to generate second candidate modification data, wherein the second candidate modification data is different from the first candidate modification data; providing second model input data based on the second candidate modification data as input to the trained machine learning model to generate second forecast data indicating a predicted result of modification of the one or more second parameters; and comparing the second forecast data to one or more target values; and after a plurality of iterations, generating a list of viable modifications, wherein each viable modification of the list of viable modifications corresponds to candidate modification data associated with forecast data that satisfies the one or more target values.

The features, functions, and advantages described herein can be achieved independently in various examples or may be combined in yet other examples, further details of which can be found with reference to the following description and drawings.

### BRIEF DESCRIPTION OF THE DRAWINGS

FIG. 1 is a diagram that illustrates a system configured to forecast airport data using one or more machine-learning models.
FIG. 2 is a block diagram of a particular example of the system of FIG. 1.
FIG. 3 is a flow chart of an example of a method of forecasting airport data using one or more machine-learning models.
FIG. 4 is a flow chart of another example of a method of forecasting airport data using one or more machine-learning models.

### DETAILED DESCRIPTION

Examples disclosed herein present systems and methods for forecasting airport data using one or more machine-learning models. In a particular example, the machine-learning model(s) enable forecasting effects of various infrastructure changes, operational changes, or both. For example, the effects of providing various alternative aviation fuels at an airport can be forecast and compared to target values, such as target environmental impact metrics.

The transition to alternative aviation fuels has the potential to significantly reduce the environmental impact of aircraft operations. For example, many alternative aviation fuels generate exhaust that does not contribute to global warming. To illustrate, combustion of hydrogen generates water vapor, rather than, for example carbon dioxide and other carbon byproducts generated by combustion of petroleum-based fuels. Additionally, some alternative aviation fuels are renewable, such as electrical power derived from solar or wind generation.

Unfortunately, the conversion to alternative aviation fuels will be gradual since no single alternative fuel is clearly superior to all others in all respects and since providing and using alternative fuels can entail significant capital expenditures and operational challenges. As a result, it is expected that different airports and/or different regions will offer different alternative fuels at different times. This can lead to challenges for aircraft operators who need to know in advance which fuel sources will be available at each airport they fly to. Examples disclosed herein include an airport database to track information about alternative aviation fuels available at various airports. The airport database enables aircraft operators to prepare flight plans that take advantage of the available alternative aviation fuels.

Additionally, the airport database enables training, updating, and use of machine-learning models to forecast the impact of various changes at individual airports. For example, when an airport is going through a capital expenditure planning process, the airport may have specific targets to meet (e.g., environmental metrics), but it may not be clear which changes (and corresponding capital expenditures) the airport should make to meet these targets. Forecasts generated by the machine-learning model(s) enable the airport to estimate the impact of various changes and thereby to select the most beneficial projects and most efficient allocation of funds. To illustrate, by using the machine-learning model(s) iteratively, a list of changes that would enable the airport to meet the targets can be generated. Similarly, when the airport is considering a particular change, the forecasts generated by the machine-learning model(s) can help to see whether the change will cause the airport to miss one or more of its targets.

The figures and the following description illustrate specific examples. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific examples described below, but by the claims and their equivalents. Particular examples are described herein with reference to the drawings. In the description, common features are designated by common reference numbers throughout the drawings.

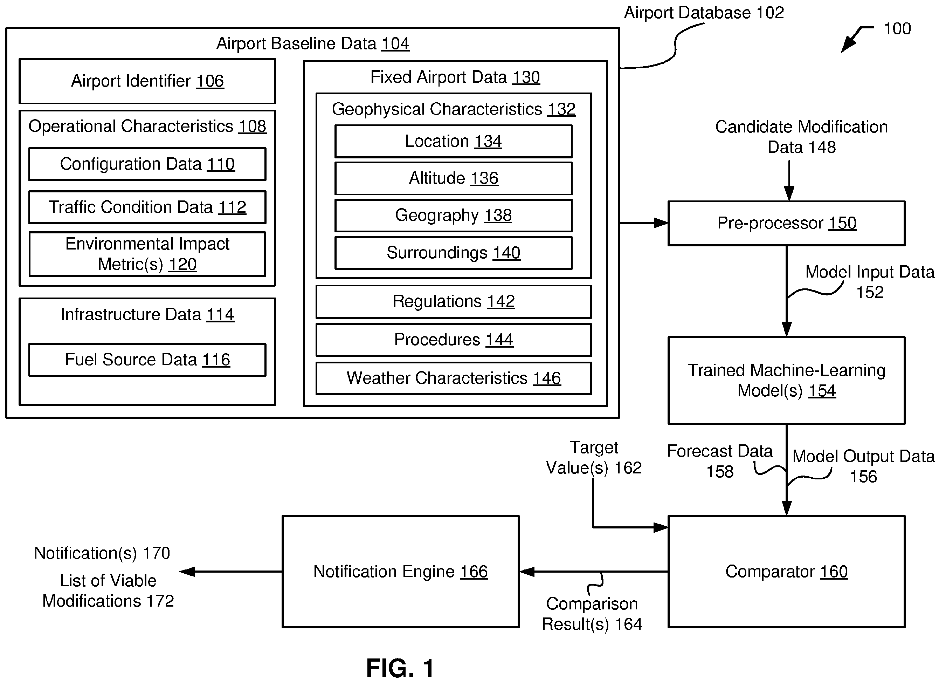

As used herein, various terminology is used for the purpose of describing particular examples only and is not intended to be limiting. For example, the singular forms "a," "an," and "the" are intended to include the plural forms as well, unless the context clearly indicates otherwise. Further, some features described herein are singular in some examples and plural in other examples. To illustrate, FIG. 1 depicts a system 100 including one or more trained machine-learning models ("trained machine-learning model(s)" 154 in FIG. 1), which indicates that in some examples the system 100 includes a single trained machine-learning model 154 and in other examples the system 100 includes multiple trained machine-learning models 154. For ease of reference herein, such features are generally introduced as "one or more" features and are subsequently referred to in the singular or optional plural (as indicated by "(s)") unless examples related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example and should not be construed as limiting or as indicating a preference or a preferred example. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some examples, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

As used herein, the term "machine learning" should be understood to have any of its usual and customary meanings within the fields of computer science and data science, such meanings including, for example, processes or techniques by which one or more computers can learn to perform some operation or function without being explicitly programmed to do so. As a typical example, machine learning can be used to enable one or more computers to analyze data to identify patterns in data and generate a result based on the analysis.

For certain types of machine learning, the results that are generated include a data model (also referred to as a "machine-learning model" or simply a "model"). Typically, a model is generated using a first data set to facilitate analysis of a second data set. For example, a set of historical data can be used to generate a model that can be used to analyze future data.

Since a model can be used to evaluate a set of data that is distinct from the data used to generate the model, the model can be viewed as a type of software (e.g., instructions, parameters, or both) that is automatically generated by the computer(s) during the machine learning process. As such, the model can be portable (e.g., can be generated at a first computer, and subsequently moved to a second computer for further training, for use, or both).

Examples of machine-learning models include, without limitation, perceptrons, neural networks, support vector machines, regression models, decision trees, Bayesian models, Boltzmann machines, adaptive neuro-fuzzy inference systems, as well as combinations, ensembles and variants of these and other types of models. Variants of neural networks include, for example and without limitation, prototypical networks, autoencoders, transformers, self-attention networks, convolutional neural networks, deep neural networks, deep belief networks, etc. Variants of decision trees include, for example and without limitation, random forests, boosted decision trees, etc.

Since machine-learning models are generated by computer(s) based on input data, machine-learning models can be discussed in terms of at least two distinct time windows - a creation/training phase and a runtime phase. During the creation/training phase, a model is created, trained, adapted, validated, or otherwise configured by the computer based on the input data (which in the creation/training phase, is generally referred to as "training data"). Note that the trained model corresponds to software that has been generated and/or refined during the creation/training phase to perform particular operations, such as classification, prediction, encoding, or other data analysis or data synthesis operations. During the runtime phase (or "inference" phase), the model is used to analyze input data to generate model output. The content of the model output depends on the type of model. For example, a model can be trained to perform classification tasks or regression tasks, as non-limiting examples.

In some examples, a previously generated model is trained (or re-trained) using a machine-learning technique. In this context, "training" refers to adapting the model or parameters of the model to a particular data set. Unless otherwise clear from the specific context, the term "training" as used herein includes "re-training" or refining a model for a specific data set. For example, training may include so-called "transfer learning." In transfer learning, a base model may be trained using a generic or typical data set, and the base model may be subsequently refined (e.g., re-trained or further trained) using a more specific data set.

Training a model based on a training data set involves changing parameters of the model with a goal of causing the output of the model to have particular characteristics based on data input to the model. To distinguish from model generation operations, model training may be referred to herein as optimization or optimization training. In this context, "optimization" refers to improving a metric, and does not mean finding an ideal (e.g., global maximum or global minimum) value of the metric. Examples of optimization trainers include, without limitation, backpropagation trainers, derivative free optimizers (DFOs), and extreme learning machines (ELMs). As one example of training a model, during supervised training of a neural network, an input data sample is associated with a label. When the input data sample is provided to the model, the model generates output data, which is compared to the label associated with the input data sample to generate an error value. Parameters of the model are modified in an attempt to reduce (e.g., optimize) the error value.

FIG. 1 depicts an example of a system 100 that is configured to forecast airport data using one or more machine-learning models according to particular examples disclosed herein. The system 100 includes an airport database 102, one or more trained machine-learning models 154, and various optional components to facilitate use of the trained machine-learning model(s) 154, such as a pre-processor 150, a comparator 160, and a notification engine 166.

The airport database 102 includes information about a plurality of airports. For example, the airport database 102 may include a global database that includes records for many airports around the world. The airport database 102 may be generated and maintained by an airport data service provider, by one or more aircraft operators, by one or more industry consortiums, by one or more government or regulatory agencies, or by another interested party. In particular examples, the airport database 102 is a distributed database, in which case, different records of the airport database 102 may be stored at different locations, such as at local or regional computing devices.

With reference to FIG. 1, an exemplary data record of the airport database 102 is illustrated. The data record is associated with a particular airport indicated by an airport identifier 106. The data record in the example illustrated in FIG. 1 includes fixed airport data 130, infrastructure data 114, and data descriptive of operational characteristics 108 of the airport. In other examples, the data record for an airport includes more, fewer, or different information than illustrated in FIG. 1. Furthermore, in other examples, the information in a data record is grouped in a different manner than illustrated in FIG. 1.

In FIG. 1, the fixed airport data 130 includes information descriptive of examples of the airport that are not readily subject to change by the operators and users of the airport. For example, the fixed airport data 130 includes information descriptive of geophysical characteristics 132 of the airport, such as a location 134 of the airport (e.g., coordinates or other descriptors), an altitude 136 of the airport, geography 138 of the airport, surroundings 140 of the airport (e.g., geography of surroundings of the airport, whether an area around the airport is urban or rural, etc.), other information descriptive of the geophysical characteristics of the airport, or any combination thereof. In FIG. 1, the fixed airport data 130 also includes regulations 142 and/or procedures 144 applicable to the airport, and prevailing weather characteristics 146 of the airport.

In FIG. 1, the operational characteristics 108 include configuration data 110, traffic condition data 112, and values of one or more environmental impact metrics 120. The configuration data 110 includes, for example, data descriptive of runway use, such as typical or available runway direction(s), length(s), etc. In some examples, the configuration data 110 may also include information descriptive of typical approach patterns, or other information related to operation of the airport. The traffic condition data 112 includes information descriptive of the typical number and/or type of aircraft that use the airport during some specified period (e.g., daily), information descriptive of the typical taxi times, delays, and/or other information indicative of how busy the airport is and why.

The environmental impact metric(s) 120 include any metric of interest to the airport or other parties (e.g., advocacy groups, government entities, trade associations, aircraft operators, consumers, etc.). As one example, the environmental impact metric(s) 120 may quantify or estimate emissions of one or more chemicals of interest, such as green house gases, petrochemical byproducts, or other regulated or unregulated chemicals. To illustrate, the environmental impact metric(s) 120 may quantify or estimate carbon dioxide emissions, carbon dioxide equivalent emissions, or both, due to activities associated with the airport.

In FIG. 1, the infrastructure data 114 includes fuel source data 116. The fuel source data 116 indicates, for example, types of fuels available at the airport and capacities associated with each fuel type. For particular types of fuels, the fuel source data 116 may indicate details such as fuel blends (e.g., blends of petroleum-based fuels, blends of non-petroleum-based fuels, and/or blends of petroleum-based and non-petroleum-based fuels). In some examples, the fuel source data 116 may also include information related to refueling rates, such as the number and type of available refueling stations. As one example, for airports that have the capability to recharge batteries of electric or hybrid electric aircraft, the fuel source data 116 may indicate the specific number, type, and locations of available recharging connectors and possibly other relevant electrical information, such as voltages available. In some examples, the fuel source data 116 may indicate which available fuels are from sustainable sources. For example, certain fuel types, such as electricity can be supplied from sustainable or non-sustainable sources, and the fuel source data 116 may indicate whether such fuels are from sustainable sources. As another example, hydrocarbon-based fuels can be derived from non-sustainable sources, such as petroleum, or from sustainable sources, such as non-petroleum sources (e.g., switchgrass, biodiesel, etc.).

In FIG. 1, the pre-processor 150 is configured to generate model input data 152 based on data from the airport database 102 and based on candidate modification data 148. In some particular examples, the pre-processor 150 obtains the candidate modification data 148 from an external source. For example, a user evaluating a particular change at an airport may input, to the system 100, an airport identifier of the airport to cause the pre-processor 150 to obtain airport baseline data 104 associated with the airport from the airport database 102. In this and selected other examples, the airport baseline data 104 is descriptive of operational characteristics of the airport, infrastructure of the airport, or both. To illustrate, the airport baseline data 104 may include information from any combination of the fixed airport data 130, the operational characteristics 108, and the infrastructure data 114 associated with the airport. In this example, the user can modify one or more parameters of the airport baseline data 104 to generate the candidate modification data 148. In general, the candidate modification data 148 does not indicate changes to the fixed airport data 130; however, in principle, there is no reason that the system 100 could not be used to evaluate such changes. To illustrate, a user may use the system 100 to model the environmental impact (e.g., change to the value(s) of the environmental impact metric(s) 120) due to potential future climate change effects on the weather characteristics 146 of the airport.

In some examples, the candidate modification data 148 includes more than one candidate change to a particular parameter. For example, a user may indicate that a set (or a range) of parameter values are to be evaluated. To illustrate, the candidate modification data 148 may indicate that availability of hydrogen fuel at two or more different refueling flowrates is to be evaluated. In some such examples, the candidate modification data 148 includes two or more candidate changes to two or more different parameters. For example, a user may indicate that a set (or a range) of parameter values are to be evaluated for each of two or more different parameters. In such circumstances, the system 100 may model and evaluate the various changes sequentially or in parallel. To illustrate, the pre-processor 150 can generate candidate modification data 148 representing each change. In this illustrative example, the pre-processor 150 can provide the model input data 152 based on each set of candidate modification data 148 to the trained machine-learning model(s) 154 sequentially (e.g., one at a time to the same trained machine-learning model(s) 154). Alternatively, in this illustrative example, the pre-processor 150 can instantiate multiple copies of the trained machine-learning model(s) 154 and provide each set of the model input data 152 to a respective copy of the multiple copies of the trained machine-learning model(s) 154 to evaluate the candidate modification data 148 in parallel. Additionally or alternatively, the system 100 may model and evaluate the various changes specified in the candidate modification data 148 independently, collectively, or both.

The trained machine-learning model(s) 154 are configured and trained to generate model output data 156 based on the model input data 152. In some particular examples, the model output data 156 includes or corresponds to forecast data 158. The forecast data 158 indicates a predicted result of modification of the one or more parameters specified in the candidate modification data 148. For example, the forecast data 158 may indicate predicted value(s) of one of the environmental impact metric(s) 120 as a result of the candidate modification data 148.

In some particular examples, the trained machine-learning model(s) 154 include one or more airport-specific models. To illustrate, a base model may be trained using training data derived from the airport database 102 and including information for a large number of different airports. As a result, the training data for the base model may include a large set of different circumstances, such as a variety of weather characteristics 146, operational characteristics 108, and geophysical characteristics 132. In this and selected other examples, after the base model is trained based on the training data, the base model can be refined (e.g. using transfer learning techniques) to be specific to a particular airport, such as fixing one or more values based on the fixed airport data 130 of the airport. Alternatively, the base model can be used to model a variety of airports, in which case, fixed airport data 130 for a particular airport to be modeled is included in the model input data 152.

In the example illustrated in FIG. 1, the model output data 156 (e.g., the forecast data 158) is provided to the comparator 160. The comparator 160 is configured to compare one or more elements (e.g. one or more values) of the model output data 156 to one or more target values 162. For example, the target value(s) 162 may indicate or include target values of the environmental impact metric(s) 120. To illustrate, the environmental impact metric(s) 120 may include an estimate of greenhouse gas emissions measured as tons of carbon dioxide equivalent emissions, and the target value(s) 162 indicate a target or desired number of tons of carbon dioxide equivalent emissions.

In the example illustrated in FIG. 1, comparison result(s) 164 generated by the comparator 160 are provided to the notification engine 166. The notification engine 166 may include a graphical user interface (GUI) engine or instructions or circuitry configured to provide output of notification(s) 170 or other information to one or more users. In some examples, the notifications 170 indicate whether the forecast data 158 satisfy the target value(s) 162. In this context, whether a particular value of the forecast data 158 satisfies a corresponding target value of the target value(s) 162 depends on a satisfaction criterion associated with the target value. To illustrate, a target value associated with greenhouse gas emissions may be satisfied when the forecast data 158 is less than (or less than or equal to) the target value; however, a target value associated with sustainable fuel utilization may be satisfied when the forecast data 158 is greater than (or greater than or equal to) the target value.

In some examples, the notification(s) 170 output by the notification engine 166 indicate whether each proposed change of the candidate modification data 148 results in forecast data 158 that satisfies the target value(s) 162. In examples in which the candidate modification data 148 includes proposed changes to multiple parameters, the notification(s) 170 include a list of viable modifications 172, where each viable modification corresponds to a particular proposed change of the candidate modification data 148 that results in forecast data 158 that satisfies the target value(s) 162.

Although the candidate modification data 148 is described above as received from a user, in some examples, the pre-processor 150 may automatically generate the candidate modification data 148 based on specified limitations. To illustrate, user input or a configuration file may indicate that several different alternative aviation fuel sources are to be evaluated to determine which, if any, to make available at the airport. In this and other selected illustrative examples, each of the alternative aviation fuel sources may be made available at different locations (e.g., gates or refueling stations) at the airport, at different numbers of locations, and with different capacities. As such, a large number of different individual changes and combinations of changes that are to be evaluated as candidate modifications can be specified efficiently by indicating which alternative aviation fuel sources are to be considered and any limitations on such considerations (e.g., a maximum capacity), and the pre-processor 150 can automatically generate specific sets of candidate modification data 148 to evaluate based on results of model output data 156 associated with prior evaluations (e.g., prior model output data 156) in order to determine, for example, one or more lists of viable modifications 172. In such examples, the pre-processor 150, the trained machine-learning model 154, and the comparator 160 operate iteratively to evaluate a large number of possible changes to determine the list(s) of viable modifications 172.

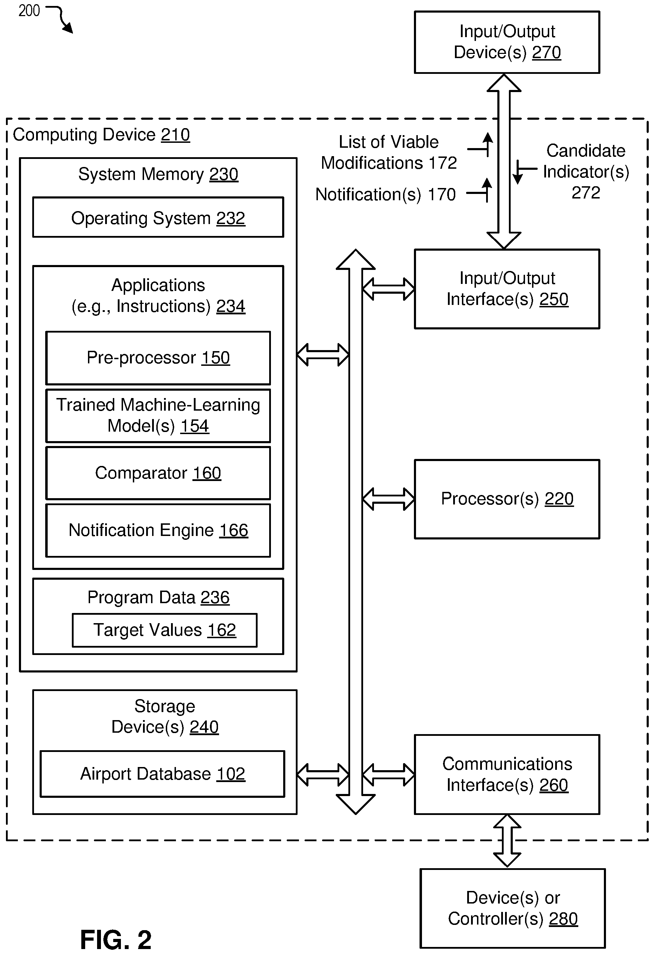

FIG. 2 is a block diagram of a particular example of the system of FIG. 1 according to particular examples disclosed herein. In particular, FIG. 2 illustrates a block diagram of a computing environment 200 including a computing device 210 configured to support examples of computer-implemented methods and computer-executable program instructions (or code) according to the present disclosure. For example, the computing device 210, or portions thereof, is configured to execute instructions to initiate, perform, or control one or more operations described with reference to the airport database 102, the pre-processor 150, the trained machine-learning model 154, the comparator 160, or the notification engine 166 of FIG. 1.

The computing device 210 includes one or more processors 220. The processor(s) 220 are configured to communicate with system memory 230, one or more storage devices 240, one or more input/output interfaces 250, one or more communications interfaces 260, or any combination thereof. The system memory 230 includes volatile memory devices (e.g., random access memory (RAM) devices), non-volatile memory devices (e.g., read-only memory (ROM) devices, programmable read-only memory, and flash memory), or both. The system memory 230 stores an operating system 232, which may include a basic input/output system for booting the computing device 210 as well as a full operating system to enable the computing device 210 to interact with users, other programs, and other devices. The system memory 230 stores system (program) data 236, such as the target values 162, the airport database 102 (or a portion thereof), or a combination thereof.

The system memory 230 includes one or more applications 234 (e.g., sets of instructions) executable by the processor(s) 220. As an example, the one or more applications 234 include instructions executable by the processor(s) 220 to initiate, control, or perform one or more operations described with reference to FIG. 1 or FIGS. 3 and 4. To illustrate, the one or more applications 234 include instructions executable by the processor(s) 220 to initiate, control, or perform one or more operations described with reference to the pre-processor 150, the trained machine-learning model(s) 154, the comparator 160, the notification engine 166, or a combination thereof.

In some particular examples, the system memory 230 includes a non-transitory, computer readable medium storing the instructions that, when executed by the processor(s) 220, cause the processor(s) 220 to initiate, perform, or control operations to forecast airport data using one or more machine-learning models. The operations include obtaining airport baseline data associated with an airport, where the airport baseline data is descriptive of operational characteristics of the airport, infrastructure of the airport, or both. The operations also include modifying one or more first parameters of the airport baseline data to generate first candidate modification data. The operations further include providing first model input data based on the first candidate modification data as input to a trained machine learning model to generate first forecast data indicating a predicted result of modification of the one or more first parameters. The operations also include comparing the first forecast data to one or more target values and generating a notification if the first forecast data fails to satisfy the one or more target values.

The one or more storage devices 240 include non-volatile storage devices, such as magnetic disks, optical disks, or flash memory devices. In some particular examples, the storage devices 240 include both removable and non-removable memory devices. The storage devices 240 are configured to store an operating system, images of operating systems, applications (e.g., one or more of the applications 234), and program data (e.g., the program data 236). In some particular examples, the system memory 230, the storage devices 240, or both, include tangible computer-readable media (e.g., non-transitory computer-readable media). In some particular examples, one or more of the storage devices 240 are external to the computing device 210.

The one or more input/output interfaces 250 enable the computing device 210 to communicate with one or more input/output devices 270 to facilitate user interaction. In some particular examples, the input/output interface(s) 250 include a display interface, an input interface, or both. For example, the input/output interface(s) 250 are adapted to receive input from a user, to receive input from another computing device, or a combination thereof. For example, the input/output interface(s) 250 can receive candidate indicators 272 from the input/output device(s) 270, where the candidate indicators 272 include parameters, configuration files, or other data that specifies the candidate modification data 148 of FIG. 1 or particular data that the pre-processor 150 uses to determine the candidate modification data 148. Additionally, or alternatively, the input/output interface(s) 250 can send to the input/output device(s) 270 the notification 170, the list of viable modifications 172, or both, of FIG. 1. In some examples, the input/output interface(s) 250 conform to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some examples, the input/output device(s) 270 include one or more user interface devices and displays, including some combination of buttons, keyboards, pointing devices, displays, speakers, microphones, touch screens, and other devices.

The processor(s) 220 are configured to communicate with devices or controllers 280 via the one or more communications interfaces 260. For example, the one or more communications interfaces 260 can include a network interface. The devices or controllers 280 can include, for example, one or more distributed servers storing portions of the airport database 102, one or more other devices, or any combination thereof.

Although FIG. 2 illustrates a single computing device 210, in other examples, the computing environment 200 may include more than one computing device 210. For example, the computing environment 200 can include two or more computing devices 210, which are configured (e.g., programmed and/or interconnected) to operate in parallel or in series to perform various operations described with reference to the system 100 of FIG. 1.

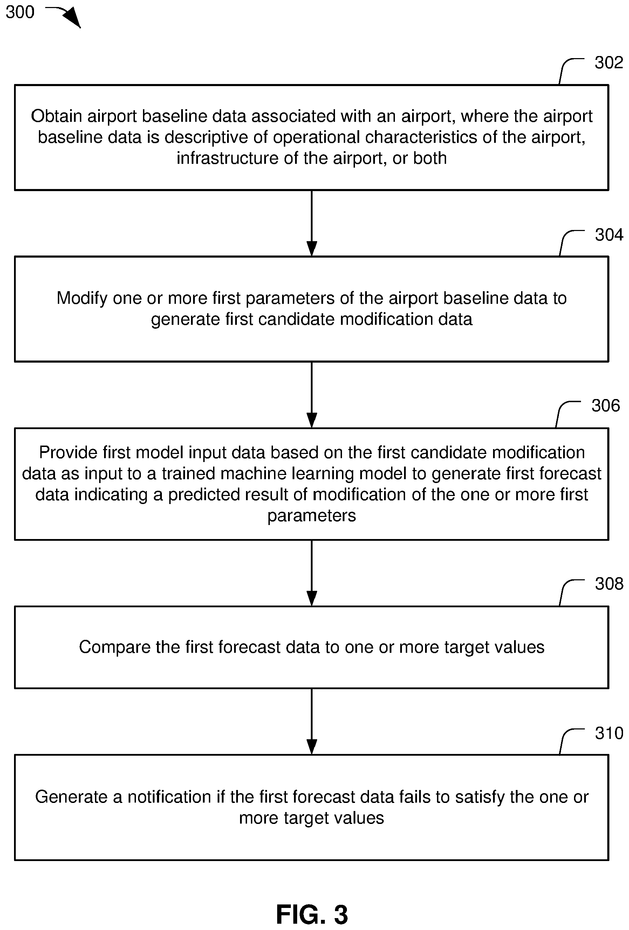

FIG. 3 is a flow chart of an example of a method 300 of forecasting airport data using one or more machine-learning models according to particular examples disclosed herein. In some particular examples, the system 100 of FIG. 1, the computing environment 200 of FIG. 2, or both, are configured to initiate, perform, or control one or more of the operations of the method 300 of FIG. 3.

The method 300 includes, at block 302, obtaining airport baseline data associated with an airport, where the airport baseline data is descriptive of operational characteristics of the airport, infrastructure of the airport, or both. For example, the airport baseline data 104 may be obtained from the airport database 102 of FIG. 1, such as by searching the airport database 102 using an airport identifier 106. In some examples, the operational characteristics of the airport described by the airport baseline data include an estimated or measured value of an environmental impact metric associated with operations at the airport. For example, the environmental impact metric may include estimated or measured emissions of one or more chemicals of interest. As another example, the environmental impact metric may include an estimated or measured value of carbon dioxide emissions, carbon dioxide equivalent emissions, or both. In some examples, the airport baseline data also specifies one or more target values, of the environmental impact metric.

The operational characteristics of the airport may also, or alternatively, include operational configuration data, traffic condition data, or both. For example, the operational characteristics 108 of the airport database 102 of FIG. 1 include the configuration data 110 and the traffic condition data 112 (in addition to the environmental impact metric(s) 120). The configuration data 110 may include, for example, characteristic (e.g., representative) airport configuration, such as information describing usually active runways and directions. The traffic condition data 112 may include, for example, characteristic (e.g., representative) airport traffic conditions, such as rate of inbound/outbound flights, type of flights, etc.

The method 300 includes, at block 304, modifying one or more first parameters of the airport baseline data to generate first candidate modification data. For example, the candidate modification data 148 of FIG. 1 may specify changes to one or more parameters of the airport baseline data 104. As one example, the one or more first parameters of the airport baseline data are modified to represent modifying fuel source availability at the airport. To illustrate, modifying fuel source availability at the airport may include making one or more sustainable fuels available at the airport, changing a sustainable fuel capacity at the airport, making one or more non-petroleum fuels available at the airport, changing a non-petroleum fuel capacity at the airport, or a combination thereof. In other examples, the one or more first parameters of the airport baseline data are modified to represent other changes to the airport baseline data, such as locations that are capable of providing alternative aviation fuels, blends of alternative aviation fuels, etc.

The method 300 includes, at block 306, providing first model input data based on the first candidate modification data as input to a trained machine learning model to generate first forecast data indicating a predicted result of modification of the one or more first parameters. For example, in FIG. 1, the pre-processor 150 provides the model input data 152 to the trained machine-learning model(s) 154. In this and other selected examples, the model input data 152 is based on the airport baseline data 104 derived from the airport database 102 and based on the candidate modification data 148. To illustrate, the model input data 152 may include one or more elements of the fixed airport data 130, such as data descriptive of geophysical characteristics 132 of the airport, regulations 142 governing the airport, procedures 144 associated with the airport, weather characteristics 146 of the airport, or a combination thereof.

The method 300 includes, at block 308, comparing the first forecast data to one or more target values. For example, the comparator 160 of FIG. 1 is configured to compare the forecast data 158 generated by the trained machine-learning model(s) 154 to the target value(s) 162 to generate the comparison result(s) 164.

The method 300 includes, at block 310, generating a notification if the first forecast data fails to satisfy the one or more target values. For example, the notification engine 166 of FIG. 1 is configured to generate the notification(s) 170 based on the comparison result(s) 164. In this example the notification(s) 170 indicate whether the forecast data 158 satisfy the target value(s) 162.

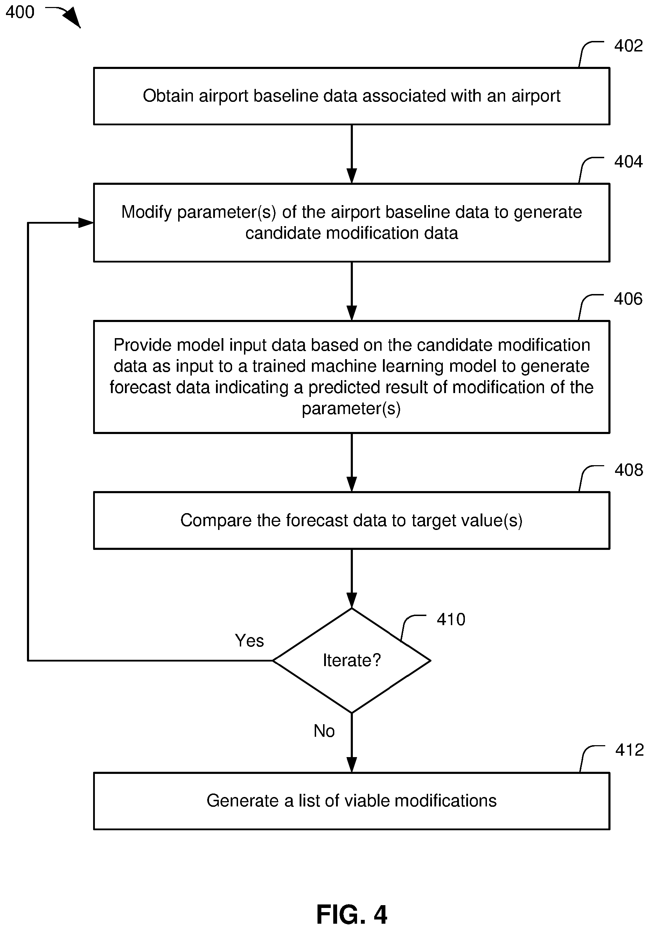

FIG. 4 is a flow chart of another example of a method 400 of forecasting airport data using one or more machine-learning models according to particular examples disclosed herein. In some particular examples, the system 100 of FIG. 1, the computing environment 200 of FIG. 2, or both, are configured to initiate, perform, or control one or more of the operations of the method 400 of FIG. 4.

The method 400 includes, at block 402, obtaining airport baseline data associated with an airport. As described with reference to block 302 of FIG. 3, the airport baseline data is descriptive of operational characteristics of the airport, infrastructure of the airport, or both. For example, the airport baseline data 104 may be obtained from the airport database 102 of FIG. 1, such as by searching the airport database 102 using an airport identifier 106.

The method 400 includes, at block 404, modifying one or more parameters of the airport baseline data to generate candidate modification data. For example, the candidate modification data 148 of FIG. 1 may specify changes to one or more parameters of the airport baseline data 104.

The method 400 includes, at block 406, providing model input data based on the candidate modification data as input to a trained machine learning model to generate forecast data indicating a predicted result of modification of the one or more parameters. For example, in FIG. 1, the pre-processor 150 provides the model input data 152 to the trained machine-learning model(s) 154. In this and other selected examples, the model input data 152 is based on airport baseline data 104 derived from the airport database 102 and based on the candidate modification data 148. The trained machine-learning model(s) 154 are configured (and trained) to generate the model output data 156 based on the model input data. For example, the model output data 156 includes or corresponds to the forecast data 158.

The method 400 includes, at block 408, comparing the forecast data to one or more target values. For example, the comparator 160 of FIG. 1 is configured to compare the forecast data 158 generated by the trained machine-learning model(s) 154 to the target value(s) 162 to generate the comparison result(s) 164.

The method 400 includes, at block 410, determining whether to perform one or more additional iterations. For example, the pre-processor 150 of FIG. 1 may be configured to generate multiple sets of candidate modifications, such as first candidate modification data indicating changes to one or more first parameters of the airport baseline data, and second candidate modification data indicating changes to one or more second parameters of the airport baseline data. In this and other selected examples, the method 400 may include performing two or more iterations. To illustrate, during a first iteration, the method 400 may include modifying the one or more first parameters of the airport baseline data to generate the first candidate modification data, providing first model input data based on the first candidate modification data as input to the trained machine learning model to generate first forecast data indicating a predicted result of modification of the one or more first parameters, and comparing the first forecast data to one or more target values. The method 400 may subsequently include performing another iteration that includes modifying one or more second parameters of the airport baseline data to generate second candidate modification data (where the second candidate modification data is different from the first candidate modification data), providing second model input data based on the second candidate modification data as input to the trained machine learning model to generate second forecast data indicating a predicted result of modification of the one or more second parameters, and comparing the second forecast data to the one or more target values. The method 400 may also include performing one or more additional iterations.

After a plurality of iterations or when no more iterations are to be performed, the method 400 includes, at block 412, generating a list of viable modifications. For example, the notification engine 166 of FIG. 1 is configured to generate the list of viable modifications 172 based on the comparison result(s) 164. Each viable modification of the list of viable modifications 172 corresponds to candidate modification data 148 associated with forecast data 158 that satisfies the one or more target values 162.

In some examples, a non-transitory, computer readable medium stores instructions that, when executed by one or more processors, cause the one or more processors to initiate, perform, or control operations to perform part or all of the functionality described above. For example, the instructions may be executable to implement one or more of the operations or methods of FIGS. 1-4. In some examples, part or all of one or more of the operations or methods of FIGS. 1-4 may be implemented by one or more processors (e.g., one or more central processing units (CPUs), one or more graphics processing units (GPUs), one or more digital signal processors (DSPs)) executing instructions, by dedicated hardware circuitry, or any combination thereof.
The illustrations of the examples described herein are intended to provide a general understanding of the structure of the various examples. The examples are not intended to serve as a complete description of all of the elements and features of apparatus and systems that utilize the structures or methods described herein. Many other examples may be apparent to those of skill in the art upon reviewing the disclosure. Other examples may be utilized and derived from the disclosure, such that structural and logical substitutions and changes may be made without departing from the scope of the claims. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific examples shown. This disclosure is intended to cover any and all subsequent adaptations or variations of various examples. Combinations of the above examples, and other examples not specifically described herein, will be apparent to those of skill in the art upon reviewing the description.

In addition, in the foregoing Detailed Description, various features may be grouped together or described in a single example for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims.

## Claims

1. A method (300) comprising:
obtaining (302) airport baseline data (104) associated with an airport, wherein the airport baseline data is descriptive of operational characteristics (108) of the airport, including a measured value of an environmental impact metric (120) associated with operations at the airport, including emissions of one or more chemicals of interest, and optionally infrastructure (114) of the airport;
modifying (304) one or more first parameters of the airport baseline data to generate first candidate modification data (148), wherein the one or more first parameters of the airport baseline data are modified to represent modifying fuel source availability at the airport;
providing (306) first model input data (152) based on the first candidate modification data as input to a trained machine learning model to generate first forecast data (158) indicating a predicted result of modification of the one or more first parameters, the first forecast data including a predicted value of the environmental impact metric;
comparing (308) the first forecast data to one or more target values (162);
generating (310) a notification (170) if the first forecast data fails to satisfy the one or more target values;
iteratively:
modifying one or more second parameters of the airport baseline data to generate second candidate modification data, wherein the second candidate modification data is different from the first candidate modification data;
providing second model input data based on the second candidate modification data as input to the trained machine learning model to generate second forecast data indicating a predicted result of modification of the one or more second parameters; and
comparing the second forecast data to one or more target values; and
after a plurality of iterations, generating (412) a list of viable modifications (172), wherein each viable modification of the list of viable modifications corresponds to candidate modification data associated with forecast data that satisfies the one or more target values.

2. The method of claim 1, wherein the first model input data also includes fixed airport data (130), wherein the fixed airport data is descriptive of geophysical characteristics (132) of the airport, regulations (142) governing the airport, procedures (144) associated with the airport, weather characteristics (146) of the airport, or any combination thereof.

3. The method of claim 2, wherein the geophysical characteristics include a location (134) of the airport, an altitude (136) of the airport, geography (138) of the airport, geography of an area surrounding (140) the airport, or any combination thereof.

4. The method of claim 2 or 3, wherein the fixed airport data, the airport baseline data, or both, are obtained from an airport database (102) based on an airport identifier (106).

5. The method of claim 4, wherein the trained machine learning model is provided by:
providing a base model trained using training data derived from the airport database (102) and including information corresponding to a number of different airports, wherein the training data for the base model includes a set of different circumstances, including a variety of weather characteristics (146), operational characteristics (108), and geophysical characteristics (132); and
after the base model is trained based on the training data including information corresponding to a number of different airports, refining the base model to be specific to the airport, by fixing one or more values based on fixed airport data (130) of the airport.

6. The method of any preceding claim, wherein the operational characteristics of the airport include one or more of operational configuration data (110), traffic condition data (112), or both.

7. The method of claim 6, wherein the operational characteristics of the airport include traffic condition data (112) including information descriptive of the typical number and/or type of aircraft that use the airport during some specified period, and/or information descriptive of the typical taxi times, delays.

8. The method of any one of claims 4 to 7, wherein the operational configuration data (110) includes data descriptive of runway use, runway direction, and/or runway length.

9. The method of any preceding claim, wherein the environmental impact metric includes carbon dioxide emissions, carbon dioxide equivalent emissions, or both.

10. The method of any of any preceding claim, wherein the one or more target values include a target value of the environmental impact metric.

11. The method of any preceding claim, wherein modifying fuel source availability at the airport includes making one or more sustainable fuels available at the airport, changing a sustainable fuel capacity at the airport, making one or more non-petroleum fuels available at the airport, changing a non-petroleum fuel capacity at the airport, or a combination thereof.

12. The method of claim 11, wherein the sustainable fuels and/or non-petroleum fuels include hydrogen and/or electrical power derived from solar or wind generation.

13. The method of any preceding claim, wherein the trained machine learning model comprises: perceptrons, neural networks, support vector machines, regression models, decision trees, Bayesian models, Boltzmann machines, and/or adaptive neuro-fuzzy inference systems.

14. A computing system (210) comprising:
one or more computer processors (220) and computer memory storing computer program instructions that, when executed by the one or more computer processors, cause the computer system to perform the method of any preceding claim.

15. A computer program comprising computer program instructions that, when executed by one or more computer processors of a computer system, cause the computer system to perform the method of any of claims 1 to 13, or a non-transitory computer-readable storage device (230) having stored thereon such a computer program.

## Patentansprüche

1. Verfahren (300), umfassend:
Erhalten (302) von Flughafen-Grunddaten (104), die einem Flughafen zugeordnet sind, wobei die Flughafen-Grunddaten Betriebsmerkmale (108) des Flughafens, einschließlich eines Messwerts einer Umweltbelastungsmetrik (120), die Betriebsvorgängen am Flughafen zugeordnet ist, einschließlich Emissionen einer oder mehrerer relevanter Chemikalien, und gegebenenfalls Infrastruktur (114) des Flughafens beschreiben;
Modifizieren (304) eines oder mehrerer erster Parameter der Flughafen-Grunddaten, um erste Kandidaten-Modifikationsdaten (148) zu erzeugen, wobei der eine oder die mehreren ersten Parameter der Flughafen-Grunddaten so modifiziert werden, dass sie das Modifizieren der Verfügbarkeit von Treibstoffquellen am Flughafen darstellen;
Bereitstellen (306) von ersten Modell-Eingabedaten (152) auf Grundlage der ersten Kandidaten-Modifikationsdaten als Eingabe für ein trainiertes maschinelles Lernmodell, um erste Prognosedaten (158) zu erzeugen, die ein vorhergesagtes Ergebnis der Modifikation des einen oder der mehreren ersten Parameter angeben, wobei die ersten Prognosedaten einen vorhergesagten Wert der Umweltbelastungsmetrik einschließen;
Vergleichen (308) der ersten Prognosedaten mit einem oder mehreren Zielwerten (162);
Erzeugen (310) einer Benachrichtigung (170), wenn die ersten Prognosedaten den einen oder die mehreren Zielwerte nicht erfüllen;
iterativ:
Modifizieren eines oder mehrerer zweiter Parameter der Flughafen-Grunddaten, um zweite Kandidaten-Modifikationsdaten zu erzeugen, wobei sich die zweiten Kandidaten-Modifikationsdaten von den ersten Kandidaten-Modifikationsdaten unterscheiden;
Bereitstellen von zweiten Modell-Eingabedaten auf Grundlage der zweiten Kandidaten-Modifikationsdaten als Eingabe für das trainierte maschinelle Lernmodell, um zweite Prognosedaten zu erzeugen, die ein vorhergesagtes Ergebnis der Modifikation des einen oder der mehreren zweiten Parameter angeben; und
Vergleichen der zweiten Prognosedaten mit einem oder mehreren Zielwerten; und
nach einer Vielzahl von Iterationen, Erzeugen (412) einer Liste tragfähiger Modifikationen (172), wobei jede tragfähige Modifikation aus der Liste tragfähiger Modifikationen Kandidaten-Modifikationsdaten entspricht, die Prognosedaten zugeordnet sind, welche den einen oder die mehreren Zielwerte erfüllen.

2. Verfahren nach Anspruch 1, wobei die ersten Modell-Eingabedaten auch feste Flughafendaten (130) einschließen, wobei die festen Flughafendaten geophysikalische Merkmale (132) des Flughafens, für den Flughafen geltende Vorschriften (142), dem Flughafen zugeordnete Abläufe (144), Witterungsmerkmale (146) des Flughafens oder eine Kombination davon beschreiben.

3. Verfahren nach Anspruch 2, wobei die geophysikalischen Merkmale einen Standort (134) des Flughafens, eine Höhenlage (136) des Flughafens, die Geographie (138) des Flughafens, die Geographie eines den Flughafen umgebenden Gebiets (140) oder eine Kombination davon einschließen.

4. Verfahren nach Anspruch 2 oder 3, wobei die festen Flughafendaten, die Flughafen-Grunddaten oder beides aus einer Flughafendatenbank (102) auf Grundlage einer Flughafenkennung (106) erhalten werden.

5. Verfahren nach Anspruch 4, wobei das trainierte maschinelle Lernmodell bereitgestellt wird durch:
Bereitstellen eines Basismodells, das unter Verwendung von Trainingsdaten trainiert wurde, die aus der Flughafendatenbank (102) abgeleitet wurden und Informationen einschließen, die einer Anzahl unterschiedlicher Flughäfen entsprechen, wobei die Trainingsdaten für das Basismodell eine Menge unterschiedlicher Umstände einschließen, einschließlich einer Vielfalt von Witterungsmerkmalen (146), Betriebsmerkmalen (108) und geophysikalischen Merkmalen (132); und
nachdem das Basismodell auf Grundlage der Trainingsdaten trainiert wurde, die Informationen einschließen, welche einer Anzahl unterschiedlicher Flughäfen entsprechen, Verfeinern des Basismodells so, dass es für den Flughafen spezifisch ist, durch Festlegen eines oder mehrerer Werte auf Grundlage von festen Flughafendaten (130) des Flughafens.

6. Verfahren nach einem vorstehenden Anspruch, wobei die Betriebsmerkmale des Flughafens eines oder mehrere von Betriebskonfigurationsdaten (110), Verkehrsbedingungsdaten (112) oder beides einschließen.

7. Verfahren nach Anspruch 6, wobei die Betriebsmerkmale des Flughafens Verkehrsbedingungsdaten (112) einschließen, einschließlich Informationen, die die typische Anzahl und/oder die Art von Flugzeugen beschreiben, die den Flughafen während eines spezifizierten Zeitraums nutzen, und/oder Informationen, die die typischen Rollzeiten, Verspätungen beschreiben.

8. Verfahren nach einem der Ansprüche 4 bis 7, wobei die Betriebskonfigurationsdaten (110) Daten einschließen, die die Nutzung von Start- und Landebahnen, die Ausrichtung von Start- und Landebahnen und/oder die Länge von Start- und Landebahnen beschreiben.

9. Verfahren nach einem vorstehenden Anspruch, wobei die Umweltbelastungsmetrik Kohlendioxidemissionen, Kohlendioxid-Äquivalent-Emissionen oder beides einschließt.

10. Verfahren nach einem vorstehenden Anspruch, wobei der eine oder die mehreren Zielwerte einen Zielwert der Umweltbelastungsmetrik einschließen.

11. Verfahren nach einem vorstehenden Anspruch, wobei das Modifizieren der Verfügbarkeit von Treibstoffquellen am Flughafen das Verfügbarmachen eines oder mehrerer nachhaltiger Treibstoffe am Flughafen, Ändern einer Kapazität von nachhaltigen Treibstoffen am Flughafen, Verfügbarmachen eines oder mehrerer nicht erdölbasierter Treibstoffe am Flughafen, Ändern einer Kapazität von nicht erdölbasierten Treibstoffen am Flughafen oder eine Kombination davon einschließt.

12. Verfahren nach Anspruch 11, wobei die nachhaltigen Treibstoffe und/oder nicht erdölbasierten Treibstoffe Wasserstoff und/oder elektrische Energie aus Solar- oder Windkraft einschließen.

13. Verfahren nach einem vorstehenden Anspruch, wobei das trainierte maschinelle Lernmodell umfasst: Perzeptronen, neuronale Netze, Support-Vektor-Maschinen, Regressionsmodelle, Entscheidungsbäume, Bayes'sche Modelle, Boltzmann-Maschinen, und/oder adaptive Neuro-Fuzzy-Inferenzsysteme.

14. Rechensystem (210), umfassend:
einen oder mehrere Computerprozessoren (220) und Computerspeicher, der Computerprogrammanweisungen speichert, die, wenn sie von dem einen oder den mehreren Computerprozessoren ausgeführt werden, bewirken, dass das Computersystem das Verfahren nach einem vorstehenden Anspruch durchführt.

15. Computerprogramm, das Computerprogrammanweisungen umfasst, die, wenn sie von einem oder mehreren Computerprozessoren eines Computersystems ausgeführt werden, bewirken, dass das Computersystem das Verfahren nach einem der Ansprüche 1 bis 13 durchführt, oder nichtflüchtige computerlesbare Speichervorrichtung (230), auf der ein solches Computerprogramm gespeichert ist.

## Revendications

1. Procédé (300) comprenant :
l'obtention (302) de données de référence aéroportuaires (104) associées à un aéroport, dans lequel les données de référence aéroportuaires décrivent les caractéristiques opérationnelles (108) de l'aéroport, y compris une valeur mesurée d'une mesure d'impact environnemental (120) associée aux opérations de l'aéroport, y compris les émissions d'un ou plusieurs produits chimiques d'intérêt, et éventuellement l'infrastructure (114) de l'aéroport ;
la modification (304) d'un ou plusieurs premiers paramètres des données de référence de l'aéroport pour générer des premières données de modification candidates (148), dans lequel le ou les premiers paramètres des données de référence de l'aéroport sont modifiés pour représenter la modification de la disponibilité de la source de carburant à l'aéroport ;
la fourniture (306) des premières données d'entrée du modèle (152) basées sur les premières données de modification candidates comme entrée d'un modèle d'apprentissage automatique entraîné pour générer les premières données de prévision (158) indiquant un résultat prévu de modification du ou des premiers paramètres, les premières données de prévision incluant une valeur prévue de la mesure d'impact environnemental ;
la comparaison (308) des premières données de prévision à une ou plusieurs valeurs cibles (162) ;
la génération (310) d'une notification (170) si les premières données de prévision ne satisfont pas à une ou plusieurs valeurs cibles ;
de manière itérative :
la modification d'un ou plusieurs deuxièmes paramètres des données de référence de l'aéroport pour générer des deuxièmes données de modification candidates, dans lequel les deuxièmes données de modification candidates sont différentes des premières données de modification candidates ;
la fourniture des données d'entrée de deuxième modèle basées sur les données de modification candidates comme entrée du modèle d'apprentissage automatique entraîné afin de générer des données de prévision secondaires indiquant un résultat prédit de la modification d'un ou plusieurs paramètres secondaires ; et
la comparaison des données de la deuxième prévision à une ou plusieurs valeurs cibles ; et
après une pluralité d'itérations, la génération (412) d'une liste de modifications viables (172), dans lequel chaque modification viable de la liste des modifications viables correspond à des données de modification candidates associées à des données de prévision qui satisfont à une ou plusieurs valeurs cibles.

2. Procédé selon la revendication 1, dans lequel les premières données d'entrée du modèle incluent également des données fixes d'aéroport (130), dans lequel les données fixes d'aéroport décrivent les caractéristiques géophysiques (132) de l'aéroport, des réglementations (142) régissant l'aéroport, des procédures (144) associées à l'aéroport, des caractéristiques météorologiques (146) de l'aéroport, ou toute combinaison de celles-ci.

3. Procédé selon la revendication 2, dans lequel les caractéristiques géophysiques incluent un emplacement (134) de l'aéroport, une altitude (136) de l'aéroport, la géographie (138) de l'aéroport, la géographie d'une zone entourant (140) l'aéroport, ou toute combinaison de ceux-ci.

4. Procédé selon la revendication 2 ou 3, dans lequel les données fixes de l'aéroport, les données de référence de l'aéroport ou les deux sont obtenues à partir d'une base de données aéroportuaire (102) basée sur un identifiant d'aéroport (106).

5. Procédé selon la revendication 4, dans lequel le modèle d'apprentissage automatique entraîné est fourni par :
la fourniture d'un modèle de base entraîné à l'aide de données d'entraînement dérivées de la base de données aéroportuaires (102) et incluant des informations correspondant à un certain nombre d'aéroports différents, dans lequel les données d'entraînement du modèle de base incluent un ensemble de circonstances différentes, notamment diverses caractéristiques météorologiques (146), opérationnelles (108) et géophysiques (132) ; et
après que le modèle de base a été entraîné sur la base des données d'entraînement incluant des informations correspondant à un certain nombre d'aéroports différents, l'affinage du modèle de base pour être spécifique à l'aéroport, en fixant une ou plusieurs valeurs sur la base de données fixes de l'aéroport (130).

6. Procédé selon une quelconque revendication précédente, dans lequel les caractéristiques opérationnelles de l'aéroport incluent une ou plusieurs données de configuration opérationnelle (110), des données de conditions de trafic (112) ou les deux.

7. Procédé selon la revendication 6, dans lequel les caractéristiques opérationnelles de l'aéroport incluent des données sur les conditions de trafic (112) incluant des informations descriptives du nombre typique et/ou du type d'aéronefs qui utilisent l'aéroport pendant une période déterminée et/ou des informations descriptives des temps d'attente et des retards typiques des taxis.

8. Procédé selon l'une quelconque des revendications 4 à 7, dans lequel les données de configuration opérationnelle (110) incluent des données descriptives de l'utilisation de la piste, de la direction de la piste, et/ou de la longueur de la piste.

9. Procédé selon une quelconque revendication précédente, dans lequel la mesure de l'impact environnemental inclut les émissions de dioxyde de carbone, les émissions équivalentes de dioxyde de carbone, ou les deux.

10. Procédé selon une quelconque revendication précédente, dans lequel la ou les valeurs cibles incluent une valeur cible de la mesure d'impact environnemental.

11. Procédé selon une quelconque revendication précédente, dans lequel la modification de la disponibilité des sources de carburant à l'aéroport inclut la mise à disposition d'un ou plusieurs carburants durables à l'aéroport, la modification d'une capacité de carburant durable à l'aéroport, la mise à disposition d'un ou plusieurs carburants non pétroliers à l'aéroport, la modification d'une capacité de carburant non pétrolier à l'aéroport, ou une combinaison de ces éléments.

12. Procédé selon la revendication 11, dans lequel les carburants durables et/ou les carburants non pétroliers incluent l'hydrogène et/ou l'énergie électrique produite à partir de sources solaires ou éoliennes.

13. Procédé selon une quelconque revendication précédente, dans lequel le modèle d'apprentissage automatique entraîné comprend : des perceptrons, des réseaux de neurones, des machines à vecteurs de support, des modèles de régression, des arbres de décision, des modèles bayésiens, des machines de Boltzmann, et/ou des systèmes d'inférence neuro-flous adaptatifs.

14. Système informatique (210) comprenant :
un ou plusieurs processeurs informatiques (220) et une mémoire informatique stockant des instructions de programme informatique qui, lorsqu'elles sont exécutées par le ou les processeurs informatiques, amènent le système informatique à exécuter le procédé selon une quelconque revendication précédente.

15. Programme informatique comprenant des instructions de programme informatique qui, lorsqu'elles sont exécutées par un ou plusieurs processeurs d'un système informatique, amènent le système informatique à exécuter le procédé selon une quelconque des revendications 1 à 13, ou un dispositif de stockage non transitoire lisible par ordinateur (230) sur lequel est stocké un tel programme informatique.
